# EUROPÄISCHE PATENTANMELDUNG

(11) **EP 2 317 023 A2**
(43) Veröffentlichungstag der Anmeldung: **04.05.2011**
(21) Anmeldenummer: 10168980.0
(22) Anmeldetag: 09.07.2010
(51) Int. Cl.: E04D 1/06, E04D 1/24

(54) **Dachplatte, insbesondere hohle Dachpfanne aus Metall, geeignet zur Durchleitung eines Wärmetauscherfluids**

(30) Priorität: 27.10.2009 DE 102009046045
(71) Anmelder: Metallwarenfabrik Marktoberdorf GmbH & Co. KG, 87616 Marktoberdorf (DE)
(72) Erfinder: Jürgens, Roland, 86860 Jengen (DE)
(74) Vertreter: Tiesmeyer, Johannes

(57) **Zusammenfassung**

Die vorliegende Erfindung betrifft eine Dachplatte (10-1,10-2), insbesondere Dachpfanne aus Metall mit einer in bestimmungsgemäßer Anbringung auf einem Dach außen liegenden Oberseite (20) und einer zu einem Dachstuhl hin gewandten Unterseite (22), wobei zwischen der Oberseite (20) und der Unterseite (22) wenigstens ein in der Dachplatte (10-1,10-2) integral ausgebildeter Hohlraum (24) ausgebildet ist, der als Kanal für die Durchleitung eines Wärmetauscherfluids in der Dachplatte (10-1,10-2) dient.

## Beschreibung

Die vorliegende Erfindung betrifft eine Dachplatte, insbesondere Dachpfanne mit einer in bestimmungsgemäßer Anbringung auf einem Dach außen liegenden Oberseite und einer zu einem Dachstuhl hin gewandten Unterseite, wobei zwischen der Oberseite und der Unterseite wenigstens ein in der Dachplatte integral ausgebildeter Hohlraum ausgebildet ist, der als Kanal für die Durchleitung eines Wärmetauscherfluids in der Dachplatte dient, wobei am Hohlraum Anschlussstellen vorgesehen sind, an denen eine Fluidverbindung zu einem Hohlraum einer benachbarten Dachplatte oder zu einem benachbarten Hohlraum derselben Dachplatte herstellbar ist, und wobei die Anschlussstellen rohrartige Anschlüsse aufweisen, die mit der Dachplatte verbunden, vorzugsweise mit dieser verschraubt sind.

Derartige Dachplatten können alternativ oder ergänzend zu herkömmlichen Dachziegeln aus Ton bzw. Dachsteinen aus Beton für die Eindeckung eines Gebäudes verwendet werden. Im Hinblick auf knapper werdende fossile Energiequellen ist es bekannt, auf Dächern auch Wärmeabsorber für in einem betreffenden Gebäude befindliche Wärmepumpen vorzusehen. Dabei wurden insbesondere durchsichtige Dachplatten bzw. Dachpfannen vorgeschlagen, mit dahinter liegenden Absorbern.

Der Erfindung liegt die Aufgabe zugrunde, eine Dachplatte der eingangs genannten Art derart weiterzubilden, dass in einfacher Weise eine Dachfläche vollständig oder teilweise als Dachabsorber für eine Wärmepumpe genutzt werden kann.

Erfindungsgemäß wird hierzu vorgeschlagen, dass die Dachplatte aus Metallblech, insbesondere Aluminiumblech hergestellt ist und dass Anschlüsse zweier benachbarter Dachplatten mittels eines fluiddichten Zwischenstücks miteinander verbindbar sind, wobei das Zwischenstück derart ausgestaltet ist, dass eine fluiddichte Verbindung bei Dilatationsbewegungen der benachbarten Dachplatten gewährleistet ist.

Eine derartige Dachplatte kann, insbesondere an ihrer sichtbaren Oberfläche, ganz unterschiedliche Formen aufweisen, so dass derartige Dachplatten aus Metall die Form herkömmlicher Dachziegel aus Ton bzw. Dachsteine aus Beton annehmen können. Somit können derartige Dachplatten in einfacher Weise in ein bestehendes Dach aus Tondachziegeln bzw. Betondachsteinen integriert werden. Aufgrund des verwendeten Materials (Metall) lässt sich ein Hohlraum auf der Rückseite der Dachplatte durch einfache formgebende Prozesse erzeugen. Ferner ermöglicht ein derart in die Dachplatte integrierter Hohlraum eine praktische Handhabung von derartigen Dachplatten beim Eindecken eines Daches.

Durch das Vorsehen von Anschlussstellen können mehrere Dachplatten bzw. mehrere Hohlräume in Serie zueinander geschaltet werden, so dass Wärmetauscherfluid durch mehrere Hohlräume strömen kann und über einen längeren Strömungsweg der Umwelt Wärme entzogen werden kann. Die Wärmeaufnahme kann dabei aus der Luft, aus Regenwasser, aus Schnee bzw. aus Wärmeeinstrahlung durch die Sonne erfolgen. Als Wärmetauschermedium kommt bevorzugt eine Sole zum Einsatz.

Die rohrartigen Verbindungsstücke bzw. Anschlüsse sind mittels eines fluiddichten Zwischenstücks miteinander verbunden. Dabei ist das Zwischenstück derart ausgebildet, dass eine Relativbewegung von zwei Anschlüssen an benachbarten Dachplatten unter Beibehaltung der fluiddichten Verbindung ermöglicht ist. Da Dächer bzw. Dachplatten starken Temperaturänderungen unterworfen sind, ist eine derartige Verbindung zwischen benachbarten Dachplatten vorteilhaft, um Relativbewegungen zwischen den Dachplatten bei sich ändernden Temperaturen aufnehmen zu können. Ferner können derartige Zwischenstücke ggf. auch in ihrer Länge angepasst werden, wenn benachbarte Dachplatten in einem etwas geringeren Abstand als üblicherweise vorgegeben angeordnet werden sollen bzw. müssen.

Bevorzugt ist eine erste Anschlussstelle an einem stirnseitigen Ende oder/und an der Unterseite des Hohlraums angeordnet, insbesondere an einem oberen Ende bei bestimmungsgemäßer Anbringung der Dachplatte am Dach. Eine zweite Anschlussstelle kann vorteilhaft an der Unterseite oder/und an der Stirnseite der Dachplatte bzw. des Hohlraums vorgesehen sein, wobei die zweite Anschlussstelle bei bestimmungsgemäßer Anbringung der Dachplatte am Dach tiefer liegt als die erste Anschlussstelle. Wärmetauscherfluid kann je nach Strömungsrichtung von der ersten zur zweiten Anschlussstelle fließen, oder umgekehrt von der zweiten zur ersten Anschlussstelle. Bei Dachplatten, welche mehrere Hohlräume, vorzugsweise zwei im Wesentlichen parallel zueinander verlaufende Hohlräume aufweisen, ist es auch denkbar, dass die jeweiligen ersten Anschlussstellen bzw. die jeweiligen zweiten Anschlussstellen der gleichen Dachplatte miteinander verbunden werden können, so dass Fluid von einem Hohlraum in den anderen Hohlraum der gleichen Dachplatte strömen kann.

Die Anschlussstellen des Hohlraums sind vorzugsweise derart ausgebildet, dass bei zwei benachbarten Dachplatten eine erste Anschlussstelle der einen Dachplatte mit der zweiten Anschlussstelle der anderen Dachplatte verbindbar ist. Eine derartige Verbindung ist insbesondere bei in der Fallllinie der Dachneigung aufeinander folgenden Dachplatten möglich, wobei bei einer derartigen Konstellation die zweite Anschlussstelle einer oberen Dachplatte mit der stirnseitigen ersten Anschlussstelle der nächst tiefer liegenden Dachplatte verbunden werden kann.

Vorzugsweise weist die Dachplatte aus Metall die Form eines herkömmlichen Dachziegels aus Ton bzw. eines Dachsteins aus Beton auf, derart, dass ein Dach aus Dachplatten und gleichartig geformten Dachziegeln oder Dachsteinen gedeckt werden kann. Es wird insbesondere daran gedacht, dass die hier vorgeschlagenen Dachplatten bei bestehenden Dächern aus Tondachziegeln bzw. Betondachsteinen einzelne oder mehrere dieser Ziegel bzw. Steine ersetzen, um nachträglich einen Dachabsorber für eine Wärmepumpe anbringen zu können. Die hier vorgestellte Dachplatte ermöglicht also insbesondere die Installation von Wärmepumpen in Siedlungsgebieten, in denen eine Tiefenbohrung zur Gewinnung von Erdwärme nicht möglich bzw. nicht zweckmäßig ist. Dies kann insbesondere der Fall sein in zentralen Stadtlagen bzw. Altstädten oder dergleichen. Die hier vorgestellten Dachplatten stellen somit eine kostengünstige Alternative zu einer Wärmepumpe mit einem in der Erde vergrabenen Wärmeabsorber dar. Aufgrund der Materialwahl Metall können die Dachplatten jede beliebige Form annehmen, die kompatibel zu bestehenden Dachziegeln aus Ton bzw. Dachsteinen aus Beton ist. Es ist somit eine vollständige Kompatibilität zu konventionellen Dacheindecksystemen gegeben. Insbesondere sind auch Anschlussmöglichkeiten von Zubehörteilen, wie etwa Schneefangvorrichtungen oder dgl. nicht eingeschränkt. Ferner sind die erfindungsgemäßen Dachplatten so dimensioniert, dass sie konventionellen Dachziegeln entsprechen und eine nach außen hin homogene Dachfläche gebildet werden kann durch Verwendung von herkömmlichen und erfindungsgemäßen Dachplatten.

Ausgehend von einem oder mehreren Blechen kann durch Umformvorgänge wie etwa Falzen und Zusammenfügen von unterschiedlichen Blechteilen bzw. -abschnitten eine fertige Dachplatte erzeugt werden. Ferner ist es auch möglich, dass die hier vorgestellten Dachplatten in einer gewünschten Farbe eingefärbt werden, beispielsweise durch Beimengung von Farbpartikeln in einem Kunststoff oder bei Dachplatten aus Metall mittels Pulverbeschichtung oder dergleichen. Durch eine derartige Farbgebung können die Dachplatten aus Metall bzw. Kunststoff in einem Verbund mit Tondachziegeln bzw. Betondachsteinen für einen Betrachter unauffällig integriert werden, so dass die Anbringung eines Dachabsorbers aus derartigen Dachplatten keine nachteiligen Wirkungen auf ästhetisches Empfinden hat, was insbesondere beim Einsatz von derartigen Dachplatten in Altstädten von Bedeutung ist.

Die Erfindung wird nachfolgend unter Bezug auf die anliegenden Figuren beispielhaft und nicht einschränkend anhand einer bevorzugten Ausführungsform beschrieben.
- Fig. 1: zeigt in den Teilfiguren a) und b) eine Draufsicht auf eine obere Stirnseite von zwei nebeneinander liegenden Dachplatten (Fig. 1 a) und eine Draufsicht auf eine Oberseite der beiden Dachplatten (Fig. 1 b).
- Fig. 2: zeigt vereinfacht und schematisch die Anordnung von mehreren Dachplatten mit Absorberfunktion in einem fertigen Dach sowie schematisch den Kreislauf für Wärmetauscherfluid.
- Fig. 3: zeigt schematisch und vereinfacht einen möglichen Wärmetauscherfluid-Kreislauf durch mehrere benachbarte Dachplatten.
- Fig. 4: zeigt einen vergrößerten Ausschnitt gemäß dem strichpunktierten Rechteck der Fig. 2.

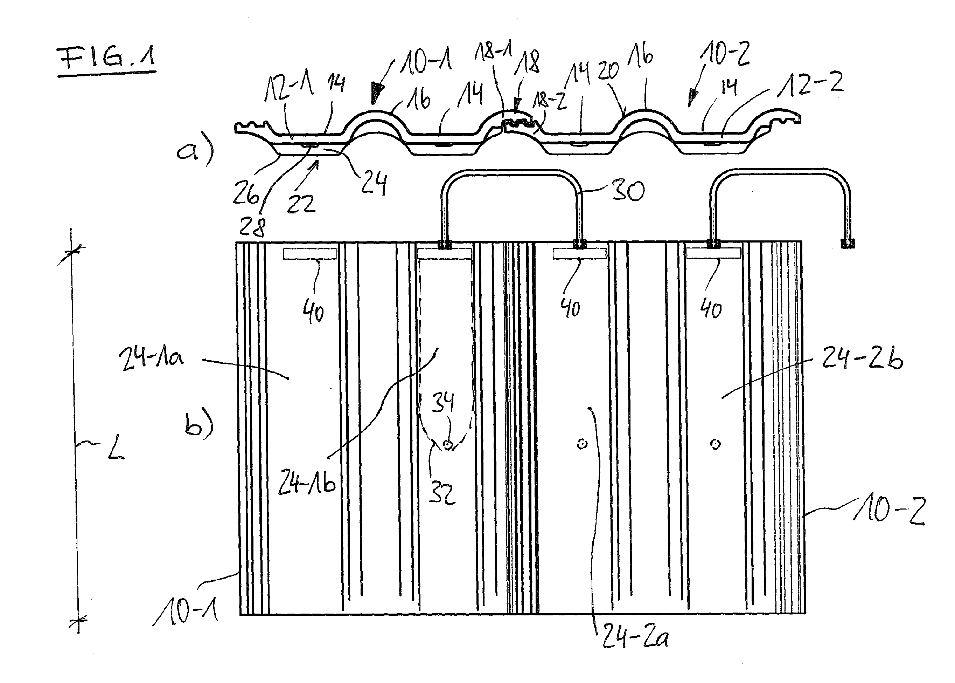

Fig. 1a) zeigt eine Ausführungsform von zwei erfindungsgemäßen Dachplatten 10-1 und 10-2 in einer Draufsicht auf eine obere Stirnseite 12-1 bzw. 12-2. Aus der Darstellung wird ersichtlich, dass die Dachplatten 10-1 und 10-2 ein für Dachplatten bzw. Dachpfannen übliches Profil aufweisen, mit zwei flachen, talartigen Abschnitten 14 und einer dazwischen liegenden Erhebung 16, die bogenartig ausgebildet sein kann. Ein die beiden Dachplatten 10-1 und 10-2 verbindender Profilabschnitt 18 wird durch einen Bogenabschnitt 18-1 an der Dachplatte 10-1 und einen Eingriffsabschnitt 18-2 an der Dachplatte 10-2 gebildet. Die Abfolge von talartigen Vertiefungen 14 und Erhebungen 16 bzw. 18 sind in bestimmungsgemäßer Anbringung der Dachplatten 10-1 bzw. 10-2 auf einem Dach nach außen bzw. nach oben hin ausgerichtet und bilden eine Oberseite 20 der Dachplatten 10-1, 10-2 bzw. eines fertigen Daches.

Unterhalb der talartigen Vertiefungen 14 befinden sich durch Wandungen 26 umgebene Hohlräume 24, die sich im Wesentlichen über die gesamte Läge einer Dachplatte 10-1 bzw. 10-2 erstrecken können. Die Hohlräume weisen an der in Fig. 1a) sichtbaren oberen Stirnseite Öffnungen 28 auf, die als Anschlussstellen zur Einleitung von Wärmetauscherfluid dienen.

Fig. 1b) zeigt in Draufsicht auf die Oberseite 20 die beiden Dachplatten 10-1 und 10-2. Wie aus dieser schematischen Darstellung ersichtlich, sind ein Hohlraum 24-1 b der Dachplatte 10-1 und ein Hohlraum 24-2a der Dachplatte 10-2 über eine Verbindungsleitung 30 verbunden, so dass Wärmetauscherfluid zwischen diesen beiden Hohlräumen strömen kann bzw. in beide Hohlräume parallel eingeleitet werden kann. Die Hohlräume 24 erstrecken sich, wie bereits erwähnt, im Wesentlichen über die gesamte Länge der jeweiligen Dachplatte 10-1 bzw. 10-2. Diese Hohlräume können allerdings, wie dies durch gestrichelte Linien beim Hohlraum 24-1 b angedeutet ist, auch mittels einer im Hohlraum ausgebildeten Trennwand 32 verkürzt sein, so dass eingeleitetes Wärmetauscherfluid zu einem zweiten Anschluss 34 am Hohlraum 34-1 b geleitet und dort austreten kann bzw. auch in den Hohlraum eingeleitet werden kann.

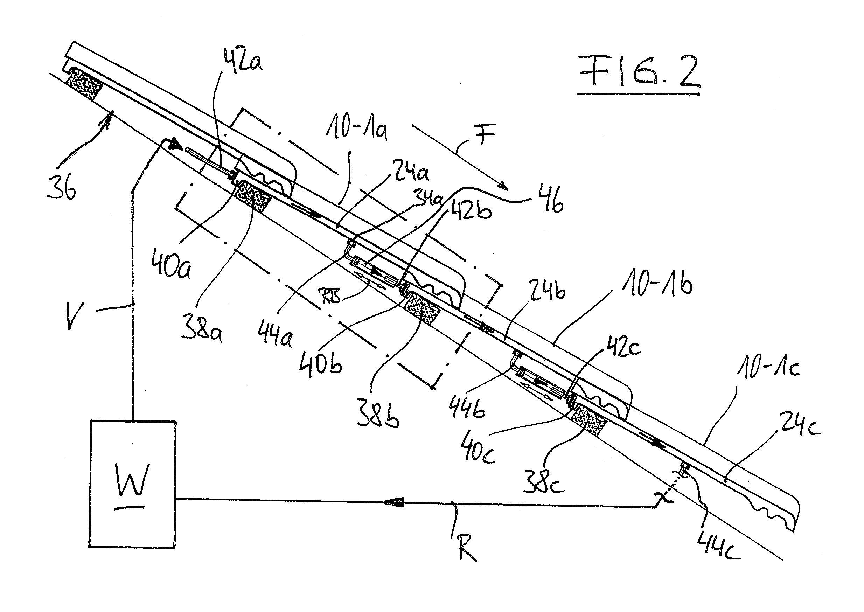

Fig. 2 zeigt vereinfacht die Anordnung von Dachplatten 10-1a-c entlang der Falllinie F eines angedeuteten, geneigten Daches 36. Die Dachplatten 10-1 a-c sind an jeweiligen Dachlatten 38a-c einer bekannten Dachkonstruktion eingehängt und befestigt. Dabei hintergreifen die Dachplatten 10-1 a-c ihre jeweilige Dachlatte 38a-c mit einem jeweiligen Vorsprung 40a-c, an welchem auch ein jeweiliger, vorzugsweise rohrförmiger Anschluss 42a-c angebracht ist. Die Vorsprünge 40a-c sind in gestrichelter Darstellung unter dem Bezugszeichen 40 auch aus der Fig. 1 ersichtlich. Auf ihrer der Dachunterkonstruktion zugewandten Unterseite 22 weist jede Dachplatte 10-1 a-c in einem mittigen Bereich, bezogen auf die Länge in Falllinienrichtung F, einen zweiten rohrförmigen Anschluss 44a-c auf. Wärmetauscherfluid, das von einer Wärmepumpe W über einen Vorlauf V zugeführt wird, strömt über den Anschluss 42a in den Hohlraum 24a der ersten Dachplatte 10-1 a und verlässt diesen Hohlraum 24a über die Öffnung 34a bzw. den zweiten Anschluss 44a. Von dort strömt das Wärmetauscherfluid durch ein die Fluidverbindung herstellendes Zwischenstück 46 zum ersten Anschluss 42b der nächsten Dachplatte 10-1b. Der stirnseitige Anschluss 42a befindet sich in der hier dargestellten bestimmungsgemäßen Anbringung der Dachplatte 10-1a am Dach 36 oberhalb des mittigen Anschlusses 44a.

Das Zwischenstück 46 ist derart ausgestaltet, dass die fluiddichte Verbindung zwischen Anschluss 44a und 42b auch bei Dilatationsbewegungen der benachbarten Dachplatten 10-1a und 10-1b gewährleistet ist. Derartige Dilatationsbewegungen treten insbesondere aufgrund der auf Dächern herrschenden großen Temperaturunterschiede auf. Somit sind die Zwischenstücke 46 derart ausgebildet, dass eine Relativbewegung RB zwischen benachbarten Dachplatten 10-1a und 10-1b möglich ist, ohne dass eine Leckage an der Wärmetauscherfluidleitung auftritt. Nachdem das Wärmetauscherfluid, das vorzugsweise eine Sole sein kann, durch die weiteren Hohlräume 24b und 24c geströmt ist, gelangt es über einen Anschluss 44c, ggf. nach Durchleitung durch weitere Hohlräume anderer, nicht dargestellter Dachplatten in einen Rücklauf R zur Wärmepumpe hin.

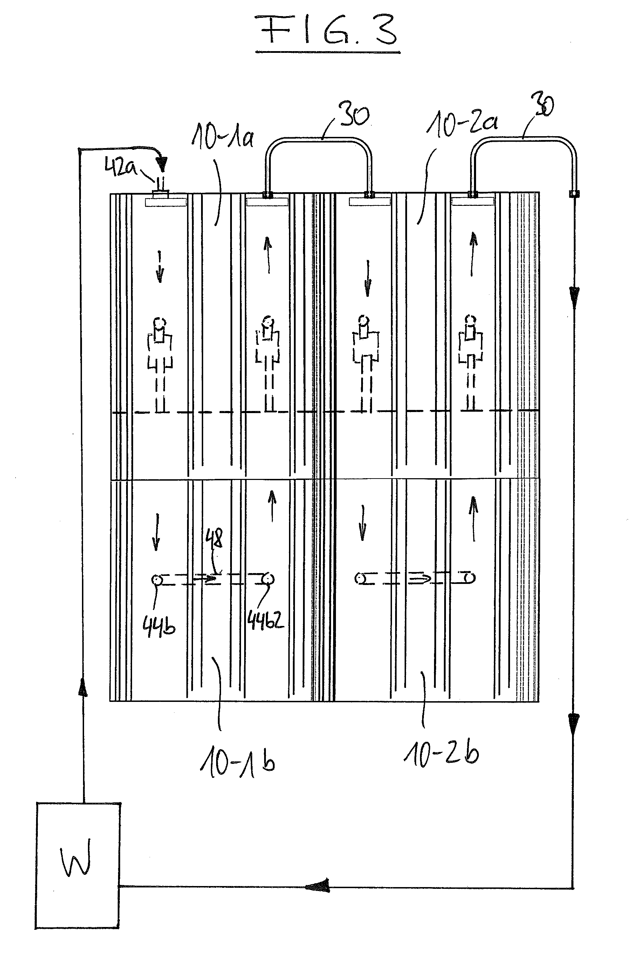

Fig. 3 zeigt eine beispielhafte Anordnung von mehreren Dachplatten 10-1 a, 10-1 b, 10-2a und 10-2b, durch welche Wärmetauscherfluid in einer seriellen Art und Weise durch die Hohlräume 24 strömen kann. Von der Wärmepumpe W kommendes Wärmetauscherfluid tritt bei dem Anschluss 42a in den ersten Hohlraum der Dachplatte 10-1a ein und strömt dann in den ersten Hohlraum der Dachplatte 10-1b, wie das unter Bezugnahme auf Fig. 2 beschrieben worden ist. Der Anschluss 44b kann, wie dies hier dargestellt ist, über eine Verbindungsleitung 48 mit einem Anschluss 44b-2 eines benachbarten Hohlraums der gleichen Dachplatte 10-1b verbunden sein, so dass das Wämetauscherfluid entgegen der Falllinienrichtung F wieder in Richtung der oberen Dachplatte 10-1a strömt. Durch eine dort angebrachte Verbindungsleitung 30 wird das Wärmetauscherfluid dann in die orthogonal zur Falllinienrichtung benachbarte Dachplatte 10-2a geleitet, wo es erneut in Falllinienrichtung zur Dachplatte 10-2b strömt, dort in den zweiten Hohlraum derselben Dachplatte 10-2b geleitet wird, und oben über eine weitere Verbindungsleitung 30 wieder aus der Dachplatte 10-2a strömt, so dass es zur Wärmepumpe W zurückgeleitet werden kann. Neben einem derartigen seriellen Durchströmen der Hohlräume der Dachplatten 10-1 a, 10-1 b, 10-2a und 10-2b ist es selbstverständlich auch denkbar, dass die Hohlräume beispielsweise in Falllinienrichtung parallel durchströmt werden, so dass ein Vorlauf V von der Wärmepumpe W beispielsweise Verbindungsleitungen 30 mit Wärmetauscherfluid speist und das Wärmetauscherfluid dann gleich gerichtet von oben nach unten fließt und durch die Anschlüsse 44 über eine Sammelleitung wieder der Wärmepumpe W zurückgeführt wird.

Das hier dargestellte Beispiel mit vier Dachplatten kann selbstverständlich beliebig erweitert werden, so dass größere Dachabsorberflächen gebildet werden können. In diesem Zusammenhang wird auch darauf hingewiesen, dass neben der Ausgestaltung von einzelnen Dachplatten auch daran gedacht wird, dass eine Art von Dachplattenverbund als Dachplatte hergestellt werden kann, die, bezogen auf die abgedeckte Fläche und die äußere sichtbare Formgebung, mehreren herkömmlichen Tondachziegeln entsprechen. Dabei können in einer derartigen flächigen Dachplatte durchgängige Hohlräume ausgebildet werden, so dass auf mehrere Anschlussstücke, wie sie in der Fig. 2 dargestellt sind, verzichtet werden könnte. Eine derartige flächige Dachplatte könnte somit als Dachabsorbermodul verwendet werden, das anstelle von mehreren Tondachziegeln bzw. von mehreren Dachplatten gemäß Fig. 2 verwendet werden kann.

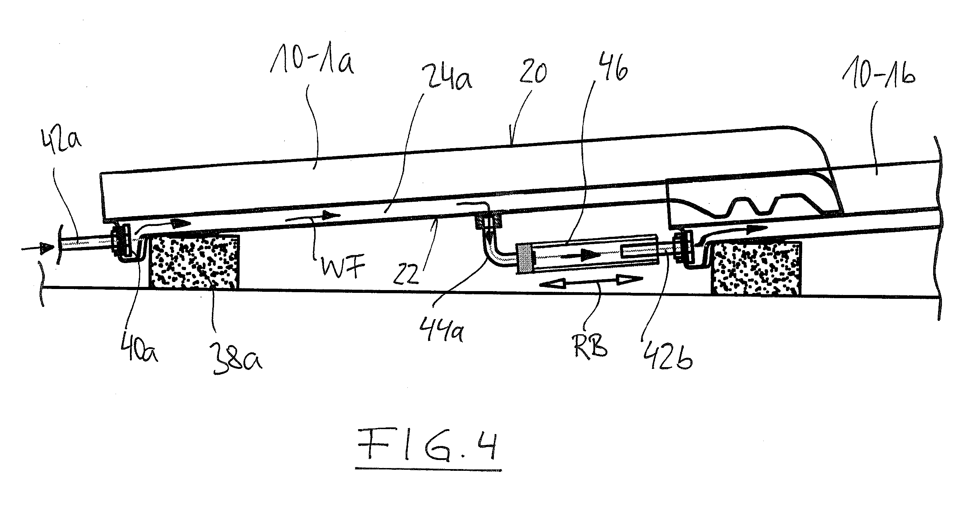

Fig. 4 zeigt in vergrößerter Darstellung den Verbindungsbereich zwischen der Dachplatte 10-1a und der Dachplatte 10-1b der Fig. 2. Aus dieser Darstellung wird ersichtlich, dass der rohrförmige Anschluss 42a mit dem die Dachlatte 38a hintergreifenden Vorsprung 40a verbunden, vorzugsweise verschraubt ist. Das Wärmetauscherfluid strömt entlang den Pfeilen WF durch den Hohlraum 24a. Das Wärmetauscherfluid tritt durch den zweiten rohrartigen Anschluss 44a aus dem Hohlraum 24a der Dachplatte 10-1 a wieder aus und wird über das fluiddichte Zwischenstück 46 zum ersten Anschluss 42b der nächst tieferen Dachplatte 10-1 b geleitet. Wie bereits erwähnt, ist das Zwischenstück 46 derart ausgebildet, dass eine Relativbewegung der Anschlüsse 44a und 42b zueinander ermöglicht ist, ohne dass die fluiddichte Verbindung beeinträchtigt wird, d.h., ohne dass eine Leckage und somit ein Austritt von Wärmetauscherfluid möglich ist.

Wie aus den vorhergehenden Ausführungen und den vorgestellten Ausführungen der erfindungsgemäßen Dachplatte ersichtlich, kann in einem integral in einer Dachplatte ausgebildeten Hohlraum Wärmetauscherfluid zirkulieren, das der Luft bzw. Regenwasser bzw. Schnee und dergleichen Wärme entziehen kann, um eine Wärmepumpe betreiben zu können. Ferner wird noch darauf hingewiesen, dass die dargestellte Verbindung von zwei Dachplatten miteinander mittels des Zwischenstücks 46 sehr einfach bei der Dacheindeckung hergestellt werden kann. Diese Anschlussstelle ist im Übrigen vollständig unter den das Dach bildenden Dachplatten angeordnet, so dass die betreffenden Anschlüsse und das die Anschlüsse verbindende Verbindungsstück gegen Witterungseinflüsse gut geschützt sind.

## Patentansprüche

1. Dachplatte, insbesondere Dachpfanne mit einer in bestimmungsgemäßer Anbringung auf einem Dach außen liegenden Oberseite (20) und einer zu einem Dachstuhl hin gewandten Unterseite (22), wobei zwischen der Oberseite (20) und der Unterseite (22) wenigstens ein in der Dachplatte (10-1, 10-2) integral ausgebildeter Hohlraum (24) ausgebildet ist, der als Kanal für die Durchleitung eines Wärmetauscherfluids in der Dachplatte (10-1, 10-2) dient, wobei am Hohlraum (24) Anschlussstellen (28, 34) vorgesehen sind, an denen eine Fluidverbindung zu einem Hohlraum einer benachbarten Dachplatte oder zu einem benachbarten Hohlraum derselben Dachplatte herstellbar ist, wobei die Anschlussstellen rohrartige Anschlüsse (42a, 44a, 42b, 44b, 42c, 44c) aufweisen, die mit der Dachplatte verbunden, vorzugsweise mit dieser verschraubt sind, **dadurch gekennzeichnet, dass** die Dachplatte aus Metallblech, vorzugsweise Aluminiumblech hergestellt ist, und dass Anschlüsse (44a, 42b) zweier benachbarter Dachplatten (10-1 a, 10-1 b) mittels eines fluiddichten Zwischenstücks (46) miteinander verbindbar sind, wobei das Zwischenstück derart ausgebildet ist, dass eine fluiddichte Verbindung bei Dilatationsbewegungen der benachbarten Dachplatten gewährleistet ist.

2. Dachplatte nach Anspruch 1, **dadurch gekennzeichnet, dass** eine erste Anschlussstelle (28) an einem stirnseitigen Ende oder/und an der Unterseite des Hohlraums (24) angeordnet ist, insbesondere an einem oberen Ende bei bestimmungsgemäßer Anbringung der Dachplatte am Dach.

3. Dachplatte nach Anspruch 2, **dadurch gekennzeichnet, dass** eine zweite Anschlussstelle (34) an der Unterseite oder/und an der Stirnseite der Dachplatte (10-1, 10-2) bzw. des Hohlraums (24) vorgesehen ist, wobei die zweite Anschlussstelle bei bestimmungsgemäßer Anbringung der Dachplatte am Dach tiefer liegt als die erste Anschlussstelle (28).

4. Dachplatte nach Anspruch 3, **dadurch gekennzeichnet, dass** die Anschlussstellen derart ausgebildet sind, dass bei zwei benachbarten Dachplatten eine erste Anschlussstelle (42b) der einen Dachplatte (10-1 b) mit der zweiten Anschlussstelle (44a) der anderen Dachplatte (10-1 a) verbindbar ist.

5. Dachplatte nach einem der Ansprüche 1-4, **dadurch gekennzeichnet, dass** das Zwischenstück (46) derart ausgebildet ist, dass eine Relativbewegung (RB) von zwei Anschlüssen (44a, 42b) an benachbarten Dachplatten (10-1 a, 10-1 b) unter Beibehaltung der fluiddichten Verbindung ermöglicht ist.

6. Dachplatte nach einem der vorhergehenden Ansprüche, **dadurch gekennzeichnet, dass** sie die Form eines herkömmlichen Dachziegels aus Ton bzw. eines Dachsteins aus Beton aufweist, derart, dass ein Dach aus Dachplatten (10-1, 10-2) und gleichartig geformten Dachziegeln oder Dachsteinen gedeckt werden kann.
